## Europäisches Patentamt

## European Patent Office

## Office européen des brevets

(19)

(11) Veröffentlichungsnummer: **0 175 239 B1**

(12) **EUROPÄISCHE PATENTSCHRIFT**

(45) Veröffentlichungstag der Patentschrift:
14.06.89

(51) Int. Cl.⁴: **G 01 G 21/07**, G 01 G 21/18, G 01 G 3/00

(21) Anmeldenummer: 85111299.5

(22) Anmeldetag: 06.09.85

(54) Verbindungselement für elektromechanische Waagen.

(30) Priorität: 17.09.84 DE 8427340 U

(43) Veröffentlichungstag der Anmeldung:
26.03.86 Patentblatt 86/13

(45) Bekanntmachung des Hinweises auf die Patenterteilung:
14.06.89 Patentblatt 89/24

(84) Benannte Vertragsstaaten:
BE CH DE FR GB IT LI NL

(56) Entgegenhaltungen:
FR-A- 1 449 206
FR-A- 2 370 266
GB-A- 302 673
US-A- 3 991 841
US-A- 4 470 471

Fachbuch "Elektromechanisches Wägen und Dotieren"
von G.W. van SANTEN, Philips Technische
Bibliothek(1967) Seiten 24, 25, 163, 164;

(73) Patentinhaber: **Siemens Aktiengesellschaft Berlin und München, Wittelsbacherplatz 2, D-8000 München 2 (DE)**

(72) Erfinder: **Hiigner, Reinhard, Dipl.-Ing. (FH), Albtalstrasse 4, D-7500 Karlsruhe (DE)**
Erfinder: **Schröder, Heinrich, Dipl.-Ing., Max-Beckmann-Strasse 26, D-7500 Karlsruhe (DE)**

ACTORUM AG

## Beschreibung

Die Erfindung bezieht sich auf ein Verbindungselement mit den Merkmalen des Oberbegriffs des Patentanspruchs 1.

Solch ein Verbindungselement ist beispielsweise aus dem Buch «Elektromechanisches Wägen und Dosieren» von G. W. van Santen, Philips Technische Bibliothek, 1967, Seiten 24, 25, Abbildung 3.1 und Seiten 163, 164 bekannt und wird auch als Lenker bezeichnet. Ein derartiges Verbindungselement soll seitliche Kraftkomponenten auffangen, die auf den Lastträger wirken können.

Bei diesen elektromechanischen Waagen ist es oftmals notwendig, den Lastträger, auf dem die zu wägenden Gegenstände aufliegen, über Verbindungselemente an der Unterlage, beispielsweise einem Fundament, zu befestigen. Somit stellen die Verbindungselemente, die beispielsweise Rohre oder Stäbe oder sonstige Trägerelemente sein können, einen Kraftnebenschluss zu den Wägezellen dar, der bei sich ändernden Umwelt- oder Betriebsbedingungen (Temperatur, Druck usw.) Fehler verursacht. Um diese Fehlereinflüsse zu vermindern, ist es beispielsweise bekannt, federnde Zwischenelemente zwischen Lastträger und Verbindungselement anzuordnen, deren Federkonstante klein ist gegenüber der Federkonstante der Wägezelle. Solche federnden Zwischenelemente können z.B. Schlauchverbindungen, Faltenbälge oder Gummiflansche sein. In vielen Fällen sind solche federnden Elemente jedoch nicht einsetzbar, da die chemische Beständigkeit, die Druckfestigkeit bzw. Rückstände im Faltenbalg kritische Grössen darstellen.

Der Erfindung liegt die Aufgabe zugrunde, ein Verbindungselement für elektromechanische Waagen vorzuschlagen, das auch bei schwierigen Umwelt- oder Betriebsbedingungen eine grosse Messgenauigkeit der Waage gewährleistet.

Zur Lösung dieser Aufgabe weist ein Verbindungselement der eingangs genannten Art erfindungsgemäss die kennzeichnenden Merkmale des Anspruchs 1 auf.

Eine vorteilhafte Verbindung zwischen lasttragendem Teil und dem festen Teil der Waage ist beim erfindungsgemässen Gegenstand dadurch gewährleistet, dass das Verbindungselement selbst Federeigenschaften besitzt, jedoch hierbei einen grossen Platzbedarf im Umfeld des lasttragenden Teils vermeidet. Es kann durch die schraubenfederartige Umlegung um das lasttragende Teil eine kleine Federkonstante bei wenig störendem Platzbedarf erreicht werden. Die kleine Federkonstante tritt hier sowohl in vertikaler wie auch in horizontaler Richtung auf. Auch sind zusätzliche Querkräfte bei einer Auslenkung des Verbindungselements weitgehend vermieden. Der Abstand zwischen dem lasttragenden Teil der Waage und anderen, die Waage umgebenden Einrichtungen kann ausserordentlich klein gehalten werden.

Weitere vorteilhafte Ausbildungen des erfindungsgemässen Verbindungselements sind in den Unteransprüchen angegeben.

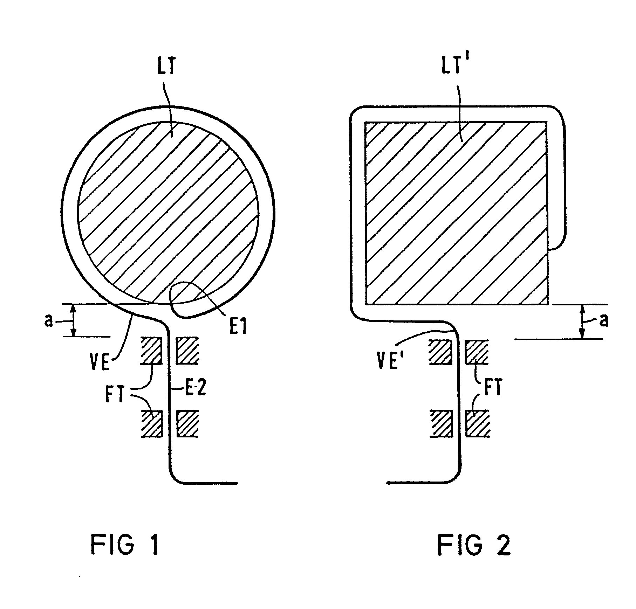

Die Erfindung wird anhand der Figuren erläutert, wobei Figur 1 und Figur 2 jeweils Schnittdarstellungen der Teile der Waage mit dem Verbindungselement für verschiedenartige Querschnitte des lasttragenden Teils darstellen.

In der Figur 1 ist ein Schnitt durch ein lasttragendes Teil LT mit rundem Querschnitt dargestellt. Ein Verbindungselement VE ist an einem Ende E1 fest am lasttragenden Teil LT angebracht und sodann schraubenfederartig um das lasttragende Teil LT herumgelegt, so dass beim dargestellten Ausführungsbeispiel eine Windung entsteht. Mit dem anderen Ende E2 ist das Verbindungselement VE an einem festen Teil (Fundament) der hier nicht weiter dargestellten Waage befestigt. Aufgrund der schraubenfederartigen Ausbildung des Verbindungselements VE kann ein äusserst geringer Abstand a zwischen dem lasttragenden Teil LT und anderen fest mit dem Fundament verbundenen, die Waage umgebenden Teilen gewährleistet werden, was aus Gründen des Platzbedarfs in vielen Fällen vorteilhaft ist.

In der Figur 2 ist ein lasttragendes Teil LT′ mit rechteckigem Querschnitt gezeigt. Das Verbindungselement VE′ ist um den grössten Teil des Umfangs des lasttragenden Teils LT′ herumgeführt und ebenfalls – wie bei der Darstellung nach der Figur 1 – im festen Teil FT der Waage eingespannt. Auch bei dem in dieser Figur dargestellten Ausführungsbeispiel ist ein kleiner Abstand a zwischen lasttragendem Teil LT′ und festem Teil FT gewährleistet, bei ausreichenden Federeigenschaften, mit denen die Messfehler klein gehalten werden können.

## Patentansprüche

1. Verbindungselement (VE, VE′) für elektromechanische Waagen,
- über das das lasttragende Teil (LT, LT′) mit dem festen Teil der Waage (FT) verbunden ist, bei dem
- die Federkonstante des Verbindungselements (VE, VE′) klein ist gegenüber der Federkonstante der Wägezelle, dadurch gekennzeichnet, dass
- das Verbindungselement (VE, VE′) schraubenfederartig um das lasttragende Teil (LT, LT′) herumgeführt ist.

2. Verbindungselement nach Anspruch 1, dadurch gekennzeichnet, dass
- das Verbindungselement (VE, VE′) mit mindestens einem Teil einer Windung um das lasttragende Teil (LT, LT′) herumgeführt ist.

3. Verbindungselement nach Anspruch 1 oder Anspruch 2, dadurch gekennzeichnet, dass
- es dem Querschnitt des lasttragenden Teils (LT, LT′) angepasst ist.

## Claims

1. Connecting element (VE, VE') for electromechanical scales,
- by way of which element the load-bearing part (LT, LT') is connected with the fixed part of the scales (FT), in the case of which
- the spring constant of the connecting element (VE, VE') is small compared with the spring constant of the weighing cell, characterised in that
- the connecting element (VE, VE') is guided about the load-bearing part (LT, LT') in the manner of a helical spring.

2. Connecting element according to claim 1, characterised in that
- the connecting element (VE, VE') is guided about the load-bearing part (LT, LT') with at least one portion of a winding.

3. Connecting element according to claim 1 or claim 2, characterised in that
- it is adapted to the cross section of the load-bearing part (LT, LT').

## Revendications

1. Elément de liaison (VE, VE') pour balances électromécaniques,
- au moyen duquel l'élément (LT, LT') supportant la charge est relié à la partie fixe de la balance (FT), et dans lequel
- la constante d'élasticité de l'élément de liaison (VE, VE') est faible par rapport à la constante d'élasticité de la cellule de pesée, caractérisé par le fait que
- l'élément de liaison (VE, VE') entoure, à la manière d'un ressort hélicoïdal, la partie (LT, LT') portant la charge.

2. Elément de liaison suivant la revendication 1, caractérisé par le fait que
- l'élément de liaison (VE, VE') entoure, au moins par une partie d'une spire, la partie (LT, LT') portant la charge.

3. Elément de liaison suivant la revendication 1 ou 2, caractérisé par le fait que
- il est adapté à la section de la partie (LT, LT') portant la charge.

FIG 1

FIG 2